# EUROPÄISCHE PATENTSCHRIFT

(11) **EP 3 356 687 B1**
(45) Veröffentlichungstag und Bekanntmachung des Hinweises auf die Patenterteilung: **08.04.2020**
(21) Anmeldenummer: 16766522.3
(22) Anmeldetag: 12.09.2016
(51) Int. Cl.: F16B 13/08

(54) **KIPPDÜBEL**
PIVOTING DOWEL
CHEVILLE À BASCULE

(30) Priorität: 29.09.2015 DE 102015116422
(43) Veröffentlichungstag der Anmeldung: 08.08.2018
(73) Patentinhaber: fischerwerke GmbH & Co. KG, 72178 Waldachtal (DE)
(72) Erfinder: DALY, Aaron, 72285 Pfalzgrafenweiler (DE)
(86) Internationale Anmeldenummer: PCT/EP2016/071427
(87) Internationale Veröffentlichungsnummer: WO 2017/055060

(56) Entgegenhaltungen:
- WO-A1-80/00734
- CA-A1- 2 502 044
- DE-U1- 29 618 192
- FR-A5- 2 175 511
- US-A- 4 286 497
- US-A1- 2002 154 964
- US-A1- 2003 118 420
- US-A1- 2006 088 399

## Beschreibung

Die Erfindung betrifft einen Kippdübel mit den Merkmalen des Oberbegriffs des Anspruchs 1.

Kippdübel werden zu einer Befestigung an Platten verwendet, typischerweise an Gipskartonplatten, die an einer Unterseite einer Decke angebracht sind. Der Kippdübel wird durch ein Loch in der Platte durch eine Anlage auf der Rückseite der Platte befestigt. Zur Befestigung muss die Rückseite der Platte nicht zugänglich sein. Eine Befestigung eines Kippdübels ist beispielsweise auch an einem Lochziegel möglich. Das Patent DE 1 121 792 offenbart einen solchen Kippdübel, der einen Balken mit einem Schraubenloch und ein schwenkbar mit dem Balken verbundenes Band aufweist. Das Schraubenloch dient zum Einschrauben einer Schraube quer zum Balken. Das Band dient zur Handhabung des Kippdübels bei seiner Befestigung. Es ist an einem Umfang des Schraubenlochs angeordnet. Zum Durchstecken des Balkens durch ein Durchgangsloch wird der Balken so geschwenkt, dass das Band sich längs an einer Seite des Balkens befindet. Am Band kann der Balken in dieser Stellung durch das Durchgangsloch gesteckt werden. Wenn der Balken durch das Durchgangsloch durchgetreten ist, wird er am Band zurückgezogen, so dass er sich auf einer Rückseite des Lochs querstellt und einen Lochrand hintergreift. Jetzt kann durch das Durchgangsloch eine Schraube in das Schraubenloch des Balkens des Kippdübels geschraubt werden, wobei der Balken durch Zug am Band gegengehalten wird.

Das Dokument US 2002/0154964 A zeigt einen weiteren Dübel aus dem Stand der Technik.

Ist eine Kraft zum Durchstecken des Balkens durch ein Durchgangsloch hoch, kann das Band sich verbiegen oder knicken.

Aufgabe der Erfindung ist, eine Biege- oder Knickgefahr des Bandes beim Durchstecken des Balkens eines Kippdübels durch ein Durchgangsloch zu verringern.

Gelöst wird diese Aufgabe durch die Merkmale des Anspruchs 1. Der erfindungsgemäße Kippdübel weist einen Balken mit einem Schraubenloch zum Eindrehen einer Schraube quer zum Balken auf. Mit "Balken" bezeichnet die Erfindung ein längliches Bauteil, das sich entlang einer Längsachse erstreckt und das in einer Längsrichtung entlang der Längsachse länger als quer zur Längsrichtung ist, so dass es in seiner Längsrichtung durch ein Durchgangsloch durchgesteckt werden kann und einen Lochrand über- bzw. hintergreift, wenn es zum Durchgangsloch quergestellt ist. "Quer zum Balken" meint nicht notwendigerweise, dass eine eingeschraubte Schraube rechtwinklig zur Balkenlängsachse steht und/oder das Schraubenloch rechtwinklig zur Balkenlängsachse verläuft, auch eine Schrägstellung der Schraube ist als "quer" im Sinne der Erfindung aufzufassen, jedenfalls, wenn die Schraube in einem stumpfen Winkel zum Balken steht.

Das Band ist ein dünnes, langgestrecktes und vorzugsweise gerades Bauteil, das sich neben einer Schraube in dem Durchgangsloch befinden kann und das so steif ist, dass sich mit ihm der Balken durch das Durchgangsloch durchstecken lässt. Das Band kann beispielsweise auch als Stiel oder Schaft aufgefasst werden.

Das Band und der Balken sind schwenkbar verbunden, wobei sie vorzugsweise einstückig sind und beispielsweise aus Kunststoff bestehen. Zur schwenkbaren Verbindung kann das Band beispielsweise mit einem Gelenk mit dem Balken verbunden und/oder biegbar sein, wobei insbesondere, wenn das Band und der Balken einstückig sind, das Band zur schwenkbaren Verbindung mit dem Balken biegbar ist. Dabei genügt es, wenn das Band in einem Biegeabschnitt vorzugsweise am oder nahe am Balken biegbar ist. Im Übrigen kann das Band starr oder biegesteif oder jedenfalls biegesteifer als im Biegeabschnitt sein.

Erfindungsgemäß weist das Band ein Widerlager für den Balken auf, an dem sich der Balken in einer Schieberichtung abstützt, wenn das Band in eine Stellung längs zum Balken und an der Seite des Balkens geschwenkt ist, was gleichbedeutend mit einem Schwenken des Balkens in eine Stellung längs zum Band ist, in der sich das Band an der Seite des Balkens befindet. Die Schieberichtung ist die Richtung, in der der Balken am Band durch ein Durchgangsloch durchgesteckt wird. Die Abstützung des Balkens am Widerlager verkürzt eine freie Länge des Bandes zwischen einer Stelle, an der das Band beim Durchstecken durch das Durchgangsloch von Hand gegriffen wird und einer Stelle, an der die Schiebekraft vom Band auf den Balken übertragen wird und die bei der Erfindung durch das Widerlager gegeben ist. Dadurch verringert die Erfindung die Gefahr, dass das Band beim Durchstecken des Balkens durch ein Durchgangsloch sich biegt oder knickt. Das ist insbesondere bei einer hohen Durchsteckkraft, also bei einem in Bezug auf den Balken und das längs an seine Seite geschwenkten Band engen Durchgangsloch ein Vorteil.

Eine Ausgestaltung der Erfindung sieht einen Biegeabschnitt des Bandes als gelenkige Verbindung vor, in dem das Band weniger biegesteif ist als außerhalb des Biegeabschnitts. Der Biegeabschnitt kann beispielsweise durch einen verkleinerten Querschnitt verwirklicht sein. Das Widerlager, an dem sich der Balken in der Schieberichtung abstützt, wenn das Band in die Längsrichtung des Balkens und an die Seite des Balkens geschwenkt ist, befindet sich bei dieser Ausgestaltung der Erfindung außerhalb des Biegeabschnitts des Bandes auf einer dem Balken abgewandten Seite des Biegeabschnitts. Dadurch ist der Biegeabschnitt von der Schiebekraft, die zum Durchstecken des Balkens durch das Durchgangsloch über das Band auf den Balken ausgeübt wird, entlastet. Einem Biegen oder Knicken des Bandes im Biegeabschnitt beim Durchstecken des Balkens durch ein Durchgangsloch wird dadurch entgegengewirkt.

Das Widerlager kann ein seitlich vom Band abstehender Vorsprung, Nase, Zahn oder dgl. sein, an dem sich der Balken mit einem Ende abstützt, wenn das Band in seiner Längsrichtung an seiner Seite geschwenkt ist. Es kann auch umgekehrt ein Vorsprung vom Balken abstehen, der in eine das Widerlager bildende Aussparung des Bandes oder dgl. eingreift, wenn das Band in die Längsrichtung des Balkens und an die Seite des Balkens geschwenkt ist. Bei einer Ausgestaltung der Erfindung weist das Band eine zahnstangenartige Verzahnung an der Seite auf, an der sich der Balken befindet, wenn das Band längs zum Balken an dessen Seite geschwenkt ist. Ein oder mehrere Zähne der Verzahnung bilden das Widerlager. Die Verzahnung kann gleichzeitig zum Festlegen einer Hülse zum Verschließen des Durchgangslochs nach der Befestigung des Kippdübels dienen. Die Verzahnung ist dazu vorzugsweise sägezahnförmig, so dass die Hülse nur in Richtung zum Balken des Kippdübels, d.h. in Richtung des Durchgangslochs, verschiebbar ist.

Vorzugsweise stützt das Band ein Ende des Balkens ab, wenn das Band in die Stellung längs zum Balken und an die Seite des Balkens geschwenkt ist. Dadurch wird eine Länge des Bandes, auf der das Band beim Durchstecken des Balkens durch ein Durchgangsloch mit einer Druckkraft beaufschlagt ist, kurz gehalten, was die Gefahr eines Biegens oder Knickens des Bandes niedrig hält.

Eine Ausgestaltung der Erfindung sieht eine Raste am Balken vor, mit der sich der Balken am Widerlager abstützt, wenn das Band längs zum Balken an dessen Seite geschwenkt ist. Die Raste ist beispielsweise als hervorstehende Rippe oder als Sägezahn und komplementär zur Verzahnung am Band ausgebildet und bewirkt eine gute Abstützung des Balkens am Band beim Durchstecken durch ein Durchgangsloch. Es können auch mehrere Rasten am Balken vorhanden sein, die mit mehreren Zähnen der Verzahnung des Bandes zusammenwirken. Allerdings ermöglicht eine Raste auch andere Widerlager als Zähne, beispielsweise ein Loch im Band, in das die Raste eintritt, wenn das Band längs zum Balken an dessen Seite geschwenkt wird. In diesem Fall kann die Raste beispielsweise die Form eines Zapfens aufweisen.

Die Erfindung wird nachfolgend anhand eines in der Zeichnung dargestellten Ausführungsbeispiels näher erläutert. Es zeigen:
- Figur 1: einen Kippdübel gemäß der Erfindung in Seitenansicht;
- Figur 2: den Kippdübel bei einem Durchstecken durch ein Durchgangsloch in einer Gipskartonplatte; und
- Figur 3: den Kippdübel aus Figuren 1 und 2 in einem an der Gipskartonplatte befestigten Zustand.

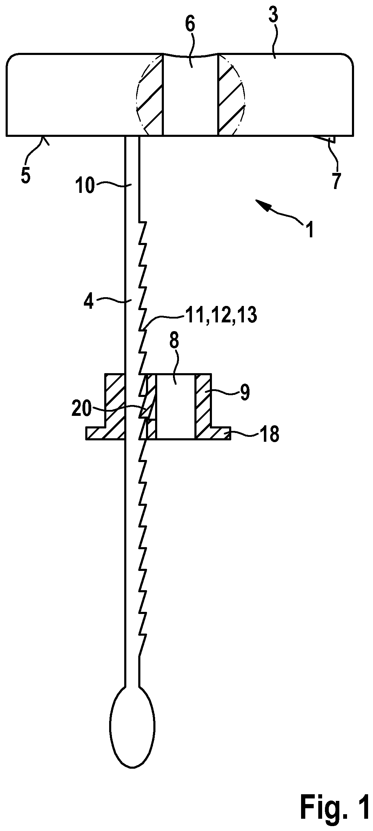

Der in Figur 1 dargestellte, erfindungsgemäße Kippdübel 1 dient zur Befestigung eines nicht dargestellten Gegenstands an insbesondere einer Platte wie beispielsweise einer Gipskartonplatte 2, deren eine Seite, die hier als Rückseite 17 bezeichnet wird, unzugänglich ist oder jedenfalls nicht zugänglich sein muss. Der Kippdübel 1 weist einen Balken 3 und ein Band 4 auf, das einstückig mit dem Balken 3 ist. Der Balken 3 ist im Ausführungsbeispiel ein Zylinder mit einer abgeflachten Seite 5, an der das Band 4 angeordnet ist. Der Balken 3 weist einen kreissegmentförmigen Querschnitt auf, der mehr als einen Halbkreis einnimmt. Der Querschnitt des Balkens 3 ist in Figur 1 eingezeichnet. Es sind andere Formen des Balkens 3 möglich, notwendig ist, dass er sich mit seitlich angelegtem Band 4 in seiner Längsrichtung durch ein Durchgangsloch 14 durchstecken lässt und quer zu dem Durchgangsloch 14 ausgerichtet einen Rand des Durchgangslochs 14 an zwei gegenüberliegenden Stellen übergreift, d.h. länger als ein Durchmesser des Durchgangslochs 14 ist.

In einer Mitte weist der Balken 3 ein Schraubenloch 6 auf, das radial durch den Balken 3 durchgeht. Das Schraubenloch 6 mündet orthogonal in der abgeflachten Seite 5 des Balkens 3. Im Ausführungsbeispiel ist das Schraubenloch 6 gewindelos und zum Einschrauben einer nicht dargestellten, selbstschneidenden Schraube, beispielsweise einer Holzschraube, vorgesehen. Es ist allerdings auch ein Schraubenloch 6 mit einem Innengewinde möglich (nicht dargestellt).

An einem Ende weist der Balken 3 an seiner abgeflachten Seite 5 eine sägezahnförmige Raste 7 auf. Es können auch mehrere Rasten 7 vorhanden sein und/oder die Raste 7 kann eine andere Form aufweisen und/oder sie kann - anders als gezeichnet - federnd sein. Das Band 4 steht nahe einem Umfang des Schraubenlochs 6 auf einer der Raste 7 gegenüberliegenden Seite von der abgeflachten Seite 5 des Balkens 3 ab. Ein Abstand des Bandes 4 vom Schraubenloch 6 ist so gewählt, dass ein Durchgangsloch 8 einer Hülse 9, die verschiebbar auf dem Band 4 geführt ist, mit dem Schraubenloch 6 fluchtet.

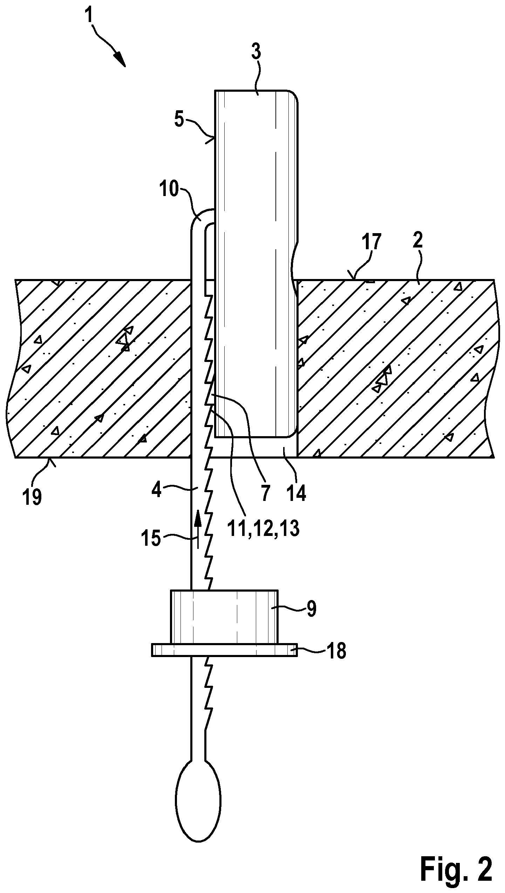

An einem balkenseitigen Ende weist das Band 4 einen Abschnitt mit einem verkleinerten Querschnitt als Biegeabschnitt 10 auf, durch den das Band 4 schwenkbar mit dem Balken 3 verbunden ist. Das Band lässt sich aus einer in Figur 1 gezeigten Stellung, in der es orthogonal von der abgeflachten Seite 5 des Balkens 3 absteht, in eine an der abgeflachten Seite 5 anliegende Stellung schwenken, die in Figur 2 gezeigt ist, bzw. es lässt sich umgekehrt der Balken 3 so schwenken, dass seine abgeflachte Seite 5 am Band 4 anliegt. Dabei überdeckt das Band 4 das Schraubenloch 6 und die Raste 7. In der auf die abgeflachte Seite 5 des Balkens 3 geschwenkten Stellung befindet sich das Band 4 längs bzw. parallel zum Balken 3 an dessen einer, hier der abgeflachten Seite 5.

Wie erwähnt sind das Band 4 und der Balken 3 einstückig beispielsweise durch Spritzgießen aus Kunststoff hergestellt.

Im Anschluss an den Biegeabschnitt 10, auf der dem Balken 3 abgewandten Seite des Biegeabschnitts 10, weist das Band 4 einen größeren Querschnitt auf und ist dort zwar ebenfalls biegbar, allerdings biegesteifer als im Biegeabschnitt 10.

Außerhalb des Biegeabschnitts 10 weist das Band 4 eine Verzahnung 11 nach Art einer Zahnstange mit im Ausführungsbeispiel sägezahnförmigen Zähnen 12 auf. Wird das Band 4 wie in Figur 2 zu sehen an die abgeflachte Seite 5 des Balkens 3 geschwenkt, gelangt die Raste 7 am einen Ende des Balkens 3 in Eingriff mit einem der Zähne 12 der Verzahnung 11 des Bandes 4. Der Zahn 12 bildet ein Widerlager 13, an dem sich der Balken 3 über seine Raste 7 in einer Schieberichtung 15 abstützt.

Zur Befestigung an beispielsweise der Gipskartonplatte 2 wird das Band 4 im Biegeabschnitt 10 gebogen und in Bezug auf den Balken 3 so geschwenkt, dass es das Schraubenloch 6 überdeckt und an der abgeflachten Seite 5 des Balkens 3 anliegt. Dabei kommt die Raste 7 des Balkens 3 in Eingriff mit der Verzahnung 11 des Bandes 4 und stützt sich in der Schieberichtung 15 an einem der Zähne 12 der Verzahnung 11 ab, der hier als Widerlager 13 bezeichnet wird. In dieser Schwenkstellung des Bandes 4 an die abgeflachte Seite 5 des Balkens 3 wird der Balken 3 in seiner Längsrichtung durch ein Durchgangsloch 14 in der Gipskartonplatte 2 durchgeschoben, wie es in Figur 2 zu sehen ist. Zum Durchschieben des Balkens 3 durch das Durchgangsloch 14 der Gipskartonplatte 2 wird der Kippdübel 1 am Band 4 gehalten und eine Schiebekraft in der Schieberichtung 15, die die Durchsteckrichtung durch das Durchgangsloch 14 in der Gipskartonplatte 2 ist, auf das Band 4 ausgeübt. Die Schiebekraft zum Durchstecken des Balkens 3 zusammen mit dem an seiner abgeflachten Seite 5 anliegenden Band 4 durch das Durchgangsloch 14 in der Gipskartonplatte 2 wird über den das Widerlager 13 bildenden Zahn 12 der Verzahnung 11 des Bandes 4 auf die Raste 7 des Balkens 3 übertragen, so dass der weniger biegesteife Biegeabschnitt 10 des Bandes 4 entlastet ist. Dadurch lässt sich der Balken 3 mit dem an seiner abgeflachten Seite 5 anliegenden Band 4 auch durch ein enges Durchgangsloch 14 durchstecken, ohne dass das Band 4 sich biegt oder abknickt. Die Bezeichnung als "Band" bedeutet nicht, dass das Band 4 biegeschlaff ist, sondern es ist elastisch und weist außerhalb des Biegeabschnitts 10 eine Biegesteifigkeit auf, durch die sich eine Schiebekraft ausüben lässt, die zum Durchstecken des Balkens 3 mit dem an seiner abgeflachten Seite 5 anliegenden Band 4 auch ein enges Durchgangsloch 14 ausreicht, ohne dass sich das Band 4 biegt oder abknickt.

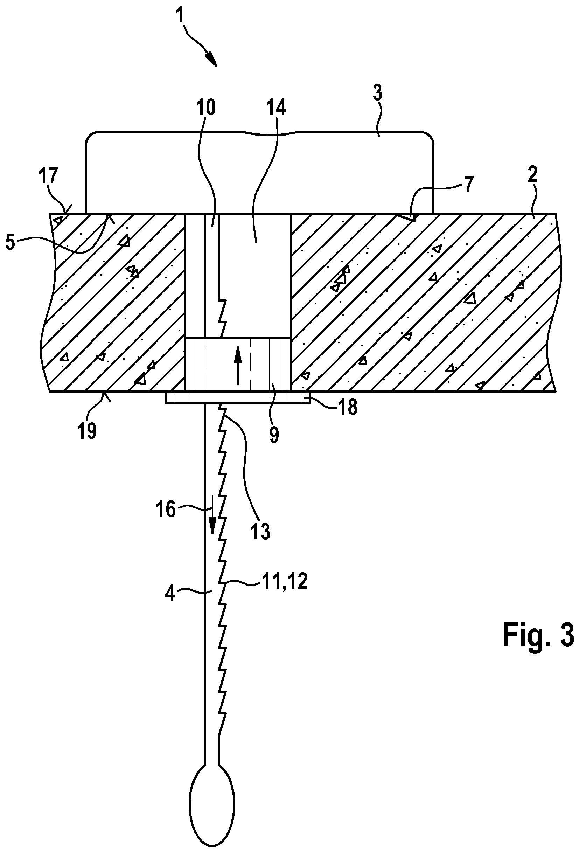

Wenn der Balken 3 durch das Durchgangsloch 14 in der Gipskartonplatte 2 durchgetreten ist, stellt er sich aufgrund einer Elastizität des Biegeabschnitts 10 des Bandes 4 quer oder zumindest schräg zum Band 4. Mit dem Band 4 wird der Balken 3 in Richtung des Pfeils 16 zurückgezogen, so dass er an einer Rückseite 17 der Gipskartonplatte 2 anliegt, wie es in Figur 3 zu sehen ist. Unter Beibehaltung einer Zugkraft am Band 4, die den Balken 3 in Anlage an der Rückseite 17 der Gipskartonplatte 2 hält, wird die Hülse 9 auf dem Band 4 in Richtung des Balkens 3 verschoben, so dass sie in das Durchgangsloch 14 der Gipskartonplatte 2 gelangt. Die Hülse 9 weist einen Flansch 18 auf, der an einer der Rückseite 17 gegenüberliegenden Vorderseite 19 der Gipskartonplatte 2 zur Anlage kommt. Die Hülse 9 weist eine Federzunge als Sperrklinke 20 auf, die in Figur 1 zu sehen ist und die mit den Zähnen 12 der zahnstangenartigen Verzahnung 11 des Bandes 4 nach Art eines Gesperres zusammenwirkt. Es ist deswegen nur eine Verschiebung der Hülse 9 in Richtung des Balkens 3 möglich, gegen eine Verschiebung in entgegengesetzter Richtung sperrt die mit der Verzahnung 11 zusammenwirkende Sperrklinke 20 der Hülse 9. Dadurch lässt sich der Balken 3 mittels der Hülse 9 über das Band 4 gegen die Rückseite 17 der Gipskartonplatte 2 spannen, so dass sich nach einem Abschneiden des Bandes 4 bündig mit dem Flansch 18 der Hülse 9 eine nicht gezeichnete Schraube durch das Durchgangsloch 8 der Hülse 9 durchstecken und in das Schraubenloch 6 des Balkens 3 einschrauben lässt, das mit dem Durchgangsloch 8 der Hülse 9 fluchtet. Mit der nicht gezeichneten, in das Schraubenloch 6 des gegen die Rückseite 17 der Gipskartonplatte 2 gespannten Balkens 3 geschraubten Schraube lässt sich ein nicht gezeichneter Gegenstand an der Gipskartonplatte 2 befestigen.

### Bezuqszeichenliste

### Kippdübel

- 1: Kippdübel
- 2: Gipskartonplatte
- 3: Balken
- 4: Band
- 5: abgeflachte Seite des Balkens 3
- 6: Schraubenloch des Balkens 3
- 7: Raste
- 8: Durchgangsloch der Hülse 9
- 9: Hülse
- 10: Biegeabschnitt
- 11: Verzahnung
- 12: Zahn
- 13: Widerlager
- 14: Durchgangsloch der Gipskartonplatte 2
- 15: Schieberichtung
- 16: Pfeil
- 17: Rückseite der Gipskartonplatte 2
- 18: Flansch der Hülse 9
- 19: Vorderseite der Gipskartonplatte 2
- 20: Sperrklinke

## Patentansprüche

1. Kippdübel zu einer Befestigung an einer Platte, mit einem Balken (3), der ein Schraubenloch (6) zum Einschrauben einer Schraube quer zum Balken (3) aufweist, und mit einem schwenkbar mit dem Balken (3) verbundenen Band (4) zum Handhaben des Kippdübels (1) bei einer Befestigung, das in eine vom Balken (3) abstehende Stellung und in eine Stellung längs zum Balken (3) und an einer Seite (5) des Balkens (3) schwenkbar ist, **gekennzeichnet durch** ein Widerlager (13) am Band (4), an dem sich der Balken (3) in einer Schieberichtung (15) des Bandes (4) abstützt, wenn das Band (4) in die Stellung längs zum Balken (3) an der Seite (5) des Balkens (3) geschwenkt ist.

2. Kippdübel nach Anspruch 1, **dadurch gekennzeichnet, dass** das Band (4) einen Biegeabschnitt (10) als gelenkige Verbindung mit dem Balken (3) aufweist und das Band (4) außerhalb des Biegeabschnitts (10) biegesteifer ist als im Biegeabschnitt (10) und sich das Widerlager (13) außerhalb des Biegeabschnitts (10) auf einer dem Balken (3) abgewandten Seite des Biegeabschnitts (10) am Band (4) befindet.

3. Kippdübel nach Anspruch 1 oder 2, **dadurch gekennzeichnet, dass** der Balken (3) und das Band (4) einstückig sind.

4. Kippdübel nach einem der Ansprüche 1-3, **dadurch gekennzeichnet, dass** das Band (4) eine zahnstangenartige Verzahnung (11) auf einer Seite aufweist, die dem Balken (3) zugewandt ist, wenn das Band (4) in die Stellung längs zum Balken (3) an die Seite (5) des Balkens (3) geschwenkt ist, und dass ein oder mehrere Zähne (12) der Verzahnung (11) das Widerlager (13) bilden.

5. Kippdübel nach Anspruch 4, **dadurch gekennzeichnet, dass** auf dem Band (4) eine Hülse (9) mit einem Durchgangsloch (8) für eine Schraube verschiebbar ist, die mit der Verzahnung (11) des Bandes (4) nach Art eines Gesperres zusammenwirkt, so dass die Hülse (9) nur in Richtung des Balkens (3) auf dem Band (4) verschiebbar ist.

6. Kippdübel nach einem der vorhergehenden Ansprüche, **dadurch gekennzeichnet, dass** sich ein Ende des Balkens (3) am Widerlager (13) abstützt, wenn das Band (4) in die Stellung längs zum Balken (3) an der Seite (5) des Balkens (3) geschwenkt ist.

7. Kippdübel nach einem der vorhergehenden Ansprüche, **dadurch gekennzeichnet, dass** der Balken (3) eine Raste (7) aufweist, mit der sich der Balken (3) am Widerlager (13) abstützt, wenn das Band (4) in die Stellung längs zum Balken (3) an die Seite (5) des Balkens (3) geschwenkt ist.

## Claims

1. Toggle fixing for fixing to a panel, having a crosspiece (3) which has a screw hole (6) for screwing in a screw transversely with respect to the crosspiece (3), and having a strip (4) pivotally connected to the crosspiece (3) for handling the toggle fixing (1) during fixing, which strip is pivotable into a position in which it projects from the crosspiece (3) and into a position longitudinal with respect to the crosspiece (3) and at a side (5) of the crosspiece (3), **characterised by** a counter-bearing (13) on the strip (4), against which the crosspiece (3) is supported in a pushing direction (15) of the strip (4) once the strip (4) has been pivoted into the position longitudinal with respect to the crosspiece (3) at the side (5) of the crosspiece (3).

2. Toggle fixing according to claim 1, **characterised in that** the strip (4) has a flexible portion (10) as articulated connection to the crosspiece (3), and the strip (4) is more resistant to bending outside the flexible portion (10) than in the flexible portion (10), and the counter-bearing (13) is located on the strip (4) outside the flexible portion (10) on a side of the flexible portion (10) remote from the crosspiece (3).

3. Toggle fixing according to claim 1 or 2, **characterised in that** the crosspiece (3) and the strip (4) are in one piece.

4. Toggle fixing according to any one of claims 1-3, **characterised in that** the strip (4) has a rack-like toothing (11) on a side that faces towards the crosspiece (3) once the strip (4) has been pivoted into the position longitudinal with respect to the crosspiece (3) to the side (5) of the crosspiece (3), and one or more teeth (12) of the toothing (11) form the counter-bearing (13).

5. Toggle fixing according to claim 4, **characterised in that** a sleeve (9) having a through-hole (8) for a screw is displaceable on the strip (4), which sleeve cooperates with the toothing (11) of the strip (4) in the manner of a pawl, so that the sleeve (9) is displaceable on the strip (4) only in the direction of the crosspiece (3).

6. Toggle fixing according to any one of the preceding claims, **characterised in that** an end of the crosspiece (3) is supported against the counter-bearing (13) once the strip (4) has been pivoted into the position longitudinal with respect to the crosspiece (3) at the side (5) of the crosspiece (3).

7. Toggle fixing according to any one of the preceding claims, **characterised in that** the crosspiece (3) has a detent (7) with which the crosspiece (3) is supported against the counter-bearing (13) once the strip (4) has been pivoted into the position longitudinal with respect to the crosspiece (3) to the side (5) of the crosspiece (3).

## Revendications

1. Cheville basculante pour une fixation à un panneau, comprenant une barrette (3) percée d'un trou de vissage (6) dévolu au vissage d'une vis transversalement par rapport à ladite barrette (3), et une bande (4) qui est reliée à ladite barrette (3) de manière pivotante, est destinée à la manipulation de ladite cheville basculante (1) lors d'une fixation, et peut pivoter vers une position saillant au-delà de la barrette (3) et vers une position longitudinale par rapport à ladite barrette (3), sur un côté (5) de ladite barrette (3), **caractérisée par** un arrêtoir (13) situé sur la bande (4) et contre lequel la barrette (3) prend appui, dans une direction de coulissement (15) de ladite bande (4), lorsque ladite bande (4) est animée d'un pivotement vers la position longitudinale par rapport à ladite barrette (3), sur le côté (5) de ladite barrette (3).

2. Cheville basculante selon la revendication 1, **caractérisée par le fait que** la bande (4) comporte une zone de flexion (10) matérialisant une liaison articulée avec la barrette (3) et ladite bande (4) présente, à l'extérieur de la zone de flexion (10), une plus grande rigidité à la flexion que dans ladite zone de flexion (10), l'arrêtoir (13) étant situé, sur ladite bande (4), à l'extérieur de la zone de flexion (10) et sur un côté de ladite zone de flexion (10) qui pointe à l'opposé de ladite barrette (3).

3. Cheville basculante selon la revendication 1 ou 2, **caractérisée par le fait que** la barrette (3) et la bande (4) se présentent d'un seul tenant.

4. Cheville basculante selon l'une des revendications 1-3, **caractérisée par le fait que** la bande (4) est pourvue d'une denture (11) du type crémaillère sur un côté qui pointe vers la barrette (3) lorsque ladite bande (4) est animée d'un pivotement vers la position longitudinale par rapport à ladite barrette (3), sur le côté (5) de ladite barrette (3); et **par le fait qu'**une ou plusieurs dent(s) (12) de ladite denture (11) forme(nt) l'arrêtoir (13).

5. Cheville basculante selon la revendication 4, **caractérisée par le fait qu'**une douille (9), percée d'un trou traversant (8) destiné à une vis, peut coulisser sur la bande (4) et coopère avec la denture (11) de ladite bande (4), à la manière d'un système de blocage, de façon telle que ladite douille (9) puisse coulisser, sur ladite bande (4), uniquement dans la direction de la barrette (3).

6. Cheville basculante selon l'une des revendications précédentes, **caractérisée par le fait qu'**une extrémité de la barrette (3) prend appui sur l'arrêtoir (13) lorsque la bande (4) est animée d'un pivotement vers la position longitudinale par rapport à ladite barrette (3), sur le côté (5) de ladite barrette (3).

7. Cheville basculante selon l'une des revendications précédentes, **caractérisée par le fait que** la barrette (3) est pourvue d'un bec encliquetable (7) par lequel ladite barrette (3) prend appui, sur l'arrêtoir (13), lorsque la bande (4) est animée d'un pivotement vers la position longitudinale par rapport à ladite barrette (3), sur le côté (5) de ladite barrette (3).
